# EUROPÄISCHE PATENTSCHRIFT

(11) **EP 3 415 061 B1**
(45) Veröffentlichungstag und Bekanntmachung des Hinweises auf die Patenterteilung: **05.08.2020**
(21) Anmeldenummer: 18177203.9
(22) Anmeldetag: 12.06.2018
(51) Int. Cl.: A47J 43/07, A47J 36/32

(54) **HAUSHALTSGERÄT**
DOMESTIC APPLIANCE
APPAREIL MÉNAGER

(30) Priorität: 16.06.2017 DE 102017113280
(43) Veröffentlichungstag der Anmeldung: 19.12.2018
(73) Patentinhaber: Vorwerk & Co. Interholding GmbH, 42275 Wuppertal (DE)
(72) Erfinder: Hackert, Georg, 44869 Bochum (DE); Helmich, Martin, 47055 Duisburg (DE); Hillen, Lorenz, 42287 Wuppertal (DE); Holz, Christian, 44137 Dortmund (DE); Isenberg, Gerhard, 50668 Köln (DE); Koetz, Hendrik, 58300 Wetter (DE); Mosebach, Andrej, 44809 Bochum (DE); Ortmann, Roman, 47057 Duisburg (DE); Dulinski, Robin, 42283 Wuppertal (DE)
(74) Vertreter: Müller, Enno

(56) Entgegenhaltungen:
- DE-A1-102013 111 472
- DE-A1-102014 119 315
- US-A1- 2016 241 653

## Beschreibung

### Gebiet der Technik

Die Erfindung betrifft ein Haushaltsgerät, welches eine Steuereinrichtung zum Steuern einer Zubereitung einer Speise entsprechend einer Folge von vorgegebenen Arbeitsschritten aufweist, wobei die Steuereinrichtung ausgebildet und eingerichtet ist, in Abhängigkeit von einem Fortgang der Folge von Arbeitsschritten mindestens einen Steuerbefehl zur Steuerung mindestens eines externen Gerätes auszugeben.

Des Weiteren betrifft die Erfindung ein System aus einem Haushaltsgerät, welches zum Zubereiten einer Speise entsprechend einer Folge von vorgegebenen Arbeitsschritten ausgebildet ist, und einem externen Reinigungsgerät.

Zudem betrifft die Erfindung ein Verfahren zum Betrieb eines Haushaltsgerätes, wobei eine Speise entsprechend einer Folge von vorgegebenen Arbeitsschritten zubereitet wird, wobei in Abhängigkeit von einem Fortgang der Folge von Arbeitsschritten ein Steuerbefehl zur Steuerung eines externen Reinigungsgerätes generiert und an das externe Reinigungsgerät übermittelt wird.

### Stand der Technik

Haushaltsgeräte zur Zubereitung von Speisen sind im Stand der Technik hinreichend bekannt. Diese ermöglichen neben einem mechanischen Verarbeiten von Nahrungsmitteln, zum Beispiel mittels eines Rührwerks oder Schneidmessers, häufig auch ein Garen der Nahrungsmittel mittels einer Heizeinrichtung. Zur Zubereitung einer Speise sind üblicherweise Kochrezepte vorgegeben, die mehrere aufeinanderfolgende Arbeitsschritte aufweisen. Um einem Nutzer des Haushaltsgerätes das Zubereiten einer Speise nach einem Kochrezept zu ermöglichen, ist es ebenfalls bekannt, Rezeptdaten bzw. entsprechende Folgen von Arbeitsschritten in einem Datenspeicher des Haushaltsgerätes oder alternativ in einem separat zu dem Haushaltsgerät ausgebildeten externen Datenspeicher zu hinterlegen.

Aus der Druckschrift EP 2 801 928 A1 (auch veröffentlicht als US 2014/0337631 A1) und auch aus der WO 2014/111204 A2 ist jeweils beispielsweise ein Haushaltsgerät bekannt, welches nach einem in einem mobilen Datenspeicher gespeicherten Rezept zeitlich aufeinanderfolgende Zubereitungsschritte durchführt, wobei sich die Zubereitungsschritte durch verschiedenartige Verfahrensparameter, wie beispielsweise Verarbeitungstemperatur, Drehzahl eines Rührwerks oder Dauer eines Verarbeitungsschrittes unterscheiden.

Weiter ist zum Stand der Technik auf die DE 10 2014 119 315 A1 und die US 2016/0241653 A1 zu verweisen.

### Zusammenfassung der Erfindung

Ausgehend von dem genannten Stand der Technik ist es Aufgabe der Erfindung, ein Haushaltsgerät so weiterzubilden, dass dieses einen Mehrwert für den Nutzer aufweist, insbesondere in Bezug auf einen vernetzten Betrieb mit anderen Geräten des Nutzers.

Zur Lösung der vorgenannten Aufgabe wird ein Haushaltsgerät vorgeschlagen, bei welchem darauf abgestellt ist, dass der Steuerbefehl eine Anweisung für das externe Gerät enthält, eine Reinigung im Bereich eines Gerätestandortes des Haushaltsgerätes auszuführen.

Gemäß dieser Ausgestaltung handelt es sich bei dem externen Gerät um ein Reinigungsgerät, wobei aber noch ein oder mehrere weitere externe Geräte hinsichtlich des Erhaltens eines Steuerbefehls zur Steuerung in die Steuereinrichtung eingebunden sein können. Insbesondere handelt es sich um ein sich selbsttätig fortbewegendes Reinigungsgerät, das sich ohne Zutun eines Nutzers zu dem Gerätestandort des Haushaltsgerätes hinbewegen kann. Das Gerät kann insbesondere ein Saugroboter, Wischroboter oder eine Kombination dieser Geräte sein. Darüber hinaus kann das Gerät jedoch auch eine Trocknungseinrichtung, ein Ventilator und/oder ein Luftreiniger sein.

Ein Betrieb eines externen Gerätes kann durch das Haushaltsgerät gesteuert werden, und zwar so, dass der Betrieb eines oder mehrerer externer Geräte von einem Fortgang der Folge von Arbeitsschritten des Haushaltsgerätes abhängig ist. Der Steuerbefehl kann wie ein Arbeitsschritt in die Folge von vorgegebenen Arbeitsschritten eingebunden sein. Ein externes Gerät ist somit abhängig von einem Fortschritt einer Rezeptabarbeitung steuerbar. Dadurch wird erreicht, dass zu Beginn, während und/oder nach dem Betrieb des Haushaltsgerätes, bzw. der Zubereitung eines Rezeptes, ein Betrieb des externen Gerätes erfolgt. Das Haushaltsgerät und das externe Gerät sind somit in Bezug auf ihren Betrieb kombiniert, wobei der Betrieb des Gerätes von dem Betrieb des Haushaltsgerätes abhängig ist. Das externe Haushaltsgerät kann beispielsweise eine elektromotorisch betriebene Küchenmaschine, ein Backofen, ein Fruchtentsaftungsgerät, ein Mixgerät, ein Herd oder auch ein anderes Gerät, wie beispielsweise ein Reinigungsgerät oder ähnliches sein. Die Übertragung des Steuerbefehls zwischen der Steuereinrichtung und dem externen Gerät erfolgt vorzugsweise im Rahmen einer drahtlosen Kommunikation, beispielsweise mittels WLAN, Bluetooth, ZigBee oder anderen drahtlosen Kommunikationswegen. Alternativ ist selbstverständlich auch eine drahtgebundene Kommunikation möglich, beispielsweise über PowerLAN. Im Sinne eines Haushaltsgerätes sind zum einen multifunktionale Haushaltsgeräte gemeint, welche beispielsweise kochen, zerkleinern, mixen oder andere Verfahrensschritte ausführen können, zum anderen jedoch auch andere Küchengeräte wie Backöfen oder Mikrowellen, sofern diese ebenso über eine Steuereinrichtung eine Zubereitung einer Speise entsprechend einer Folge von vorgegebenen Arbeitsschritten ermöglichen. Die Arbeitsschritte können dabei beispielsweise verschiedene Heizstufen, Lüftungseinstellungen und/oder den Betrieb einer Grillfunktion betreffen.

Das externe Gerät ist vorzugsweise an dem Haushaltsgerät bzw. dessen Steuereinrichtung registriert, und/oder umgekehrt. Insbesondere verfügt die Steuereinrichtung des Haushaltsgerätes über eine Geräte-Identifikation des zu steuernden Gerätes, welche vorzugsweise mit dem Steuerbefehl an das externe Gerät übermittelt wird. Es kann insbesondere vorgesehen sein, dass während einer Registrierung des Gerätes an dem Haushaltsgerät neben der Geräte-Identifikation auch der Gerätetyp und/oder der Gerätestandort übermittelt wird.

Insbesondere ist das Ausgeben des Steuerbefehls ein Arbeitsschritt des Haushaltsgerätes, welcher in die Folge von vorgegebenen Arbeitsschritten integriert ist. Sofern das Haushaltsgerät dann die Folge von vorgegebenen Arbeitsschritten in üblicher Art und Weise abarbeitet, um eine Speise zuzubereiten, wird der Steuerbefehl automatisch ausgegeben, sobald dieser gemäß der Abfolge von Arbeitsschritten an der Reihe ist. Somit kann ein Reinigungsmodus eines autonomen Reinigungsgerätes automatisch durch das Haushaltsgerät gesteuert werden. Dadurch wird erreicht, dass zu Beginn, während und/oder nach der Benutzung des Haushaltsgerätes eine Reinigung des Gerätestandortes des Haushaltsgerätes gestartet wird. Vorzugsweise ist in jedem Rezept, d. h. jeder Folge von vorgegebenen Arbeitsschritten, des Haushaltsgerätes neben den Zutaten und Zubereitungsschritten auch ein Steuerbefehl hinterlegt, welcher die Geräteidentifikation des zu steuernden Reinigungsgerätes enthält und welcher bestimmt, welche Reinigungsart erforderlich ist und/oder wie das zu steuernde Reinigungsgerät angesprochen werden kann.

Gemäß einer Ausführung kann vorgesehen sein, dass die Steuereinrichtung des Haushaltsgerätes ausgebildet und eingerichtet ist, in Abhängigkeit von einem Fortgang der Arbeitsschritte einen Steuerbefehl zur Steuerung eines Reinigungsgerätes oder einer Bilderfassungseinrichtung zur Erfassung eines Reinigungsstatus der Umgebung des Haushaltsgerätes auszugeben. Insbesondere kann der Steuerbefehl beinhalten, zu Beginn und während bzw. nach Beendigung eines Arbeitsschrittes des Haushaltsgerätes eine Bilderfassungseinrichtung zur Aufnahme eines Bildes der Umgebung des Haushaltsgerätes zu erfassen. Die Bilderfassungseinrichtung kann entweder eine eigene Einrichtung des Haushaltsgerätes sein, ein separat ausgebildetes externes Gerät, beispielsweise zugeordnet einer separaten externen Ablaufsteuerung, der eine Einrichtung eines Reinigungsgerätes, welches den Gerätestandort des Haushaltsgerätes reinigen soll. Die Bilderfassungseinrichtung wird durch den Steuerbefehl so gesteuert, dass jeweils zu Beginn der Folge von Arbeitsschritten des Haushaltsgerätes, als auch später im Verlauf der Folge von Arbeitsschritten ein Verschmutzungszustand der Umgebung des Haushaltsgerätes erfasst wird. Durch einen Vergleich der Bilder kann auf einen Umfang, eine Art und/oder einen Ort der Verschmutzung geschlossen werden, um gezielt mittels des Steuerbefehls des Haushaltsgerätes ein externes Gerät, nämlich ein Reinigungsgerät, so zu steuern, dass die Verschmutzung beseitigt wird. Eine die Bilder der Bilderfassungseinrichtung verarbeitende Software kann entweder einer Steuerung des Haushaltsgerätes zugeordnet sein, einer vernetzten Applikation eines Netzwerkservers und/oder einer externen Recheneinrichtung, wobei das Vergleichsergebnis der Steuereinrichtung des Haushaltsgerätes zum Ausgeben eines Steuerbefehls zur Reinigung zur Verfügung gestellt wird. Die Bilderfassungseinrichtung kann ein integrierter Bestandteil des Haushaltsgerätes sein, aber auch einer separaten externen Ablaufsteuerung zugeordnet sein oder als eigenständiges Zubehör in der Umgebung des Haushaltsgerätes angeordnet sein. Auch kann eine gegebenenfalls in dem externen Gerät selbst, d. h. vorzugsweise in einem Reinigungsgerät, integrierte Bilderfassungseinrichtung zur Detektion einer Verschmutzung eingesetzt werden, indem das externe Gerät zu Beginn und währen bzw. nach Abschluss einer gesteuerten Folge von Arbeitsschritten des Haushaltsgerätes eine Inspektionsfahrt in der Umgebung des Haushaltsgerätes, vorzugsweise im Bereich des Gerätestandortes des Haushaltsgerätes, durchführt.

Es wird zudem vorgeschlagen, dass der Steuerbefehl eine Information über eine Zutat aufweist, welche in der Folge von vorangegangenen Arbeitsschritten enthalten ist. Gemäß dieser Ausführung beinhaltet der Steuerbefehl für das externe Gerät eine Information über kürzlich verwendete Zutaten. Gegebenenfalls kann diese Information nicht in dem Steuerbefehl enthalten sein, sondern in einer Datei, welche mit dem Steuerbefehl verknüpft ist und/oder aufgerufen wird. Die Information über die Zutat gibt zum Beispiel einen Hinweis darauf, welche Reinigungsart besonders erfolgreich ist, falls Anteile dieser Zutat im Bereich des Gerätestandortes des Haushaltsgerätes verschüttet wurden, beispielsweise auf einen Fußboden. In Abhängigkeit davon kann ein externes Reinigungsgerät Maßnahmen bestimmen, welche zur Beseitigung genau dieser Zutat vorteilhaft sind. Der von dem Haushaltsgerät an das Gerät übermittelte Steuerbefehl gibt somit keine konkrete Reinigungsart vor, sondern nur eine Anweisung, eine Reinigung im Bereich des Gerätestandortes des Haushaltsgerätes durchzuführen. Geeignete Maßnahmen werden von dem Reinigungsgerät selbst in Abhängigkeit von der jeweiligen Zutat und gegebenenfalls deren Menge festgelegt.

Neben dem zuvor beschriebenen Haushaltsgerät wird mit der Erfindung des Weiteren auch ein System aus einem Haushaltsgerät und einem externen Reinigungsgerät vorgeschlagen, wobei das Haushaltsgerät zum Zubereiten einer Speise entsprechend einer Folge von vorgegebenen Arbeitsschritten ausgebildet ist, und wobei eine Steuereinrichtung des Haushaltsgerätes und/oder eine separat zu dem Haushaltsgerät ausgebildete Steuereinrichtung ausgebildet und eingerichtet ist, in Abhängigkeit von einem Fortgang der Folge von Arbeitsschritten einen Steuerbefehl an das Reinigungsgerät zu übermitteln, wobei der Steuerbefehl eine Anweisung aufweist, eine Reinigung im Bereich eines Gerätestandortes des Haushaltsgerätes auszuführen. Das System kann insbesondere auch ein Teil eines zentralen Hausautomationssystems sein, in welchem gegebenenfalls auch weitere Geräte des Haushalts vernetzt sein können, beispielsweise elektromotorisch betriebene Rollläden, Beleuchtungseinrichtungen, Audio-Video-System, Heizeinrichtungen, Klimatisierungseinrichtungen und dergleichen. Das System weist eine zentrale Steuereinrichtung auf, welche in ein Gerät des Systems integriert sein kann, beispielsweise in das Haushaltsgerät. Des Weiteren kann die Steuereinrichtung jedoch auch eine separat ausgebildete Steuereinrichtung sein. Die zentrale Steuereinrichtung dient einer Kommunikation zwischen den in dem System vernetzten Geräten, unter anderem dem Haushaltsgerät und dem Reinigungsgerät. Neben dem Reinigungsgerät können auch hinsichtlich des Systems noch ein oder mehrere weitere Geräte einbezogen sein. Falls die Geräte des Systems mittels einer drahtlosen Kommunikation kommunizieren, kann die Steuereinrichtung beispielsweise ein Access Point eines WLAN-Netzwerkes sein. Im Übrigen gelten die zuvor in Bezug auf das Haushaltsgerät beschriebenen Merkmale und Vorteile auch für das erfindungsgemäße System.

Des Weiteren wird vorgeschlagen, dass die separate Steuereinrichtung des Systems eingerichtet ist, den Steuerbefehl zu generieren und an das Gerät zu übermitteln. Alternativ kann jedoch auch vorgesehen sein, dass die separate Steuereinrichtung eingerichtet ist, einen von der Steuereinrichtung des Haushaltsgerätes generierten Steuerbefehl an das Gerät weiterzuleiten. Diese Ausgestaltungen können sich auch auf das ein oder mehrere weitere Gerät beziehen. Gemäß der erstgenannten Alternative generiert die separate Steuereinrichtung den Steuerbefehl für das externe Gerät selbst und übermittelt diesen an das Gerät. Gemäß der zuletzt genannten Alternative generiert die integrierte Steuereinrichtung des Haushaltsgerätes den Steuerbefehl und übermittelt diesen zunächst an die zentrale Steuereinrichtung des Systems. Die zentrale Steuereinrichtung kann den Steuerbefehl dann entweder unverändert an das Gerät weiterleiten oder diesen abändern und/oder ergänzen.

Es kann des Weiteren vorgesehen sein, dass das System eine externe Speichereinrichtung, insbesondere einen Webserver, aufweist, in welcher Speichereinrichtung eine Folge von Arbeitsschritten zur Zubereitung einer Speise und/oder ein Steuerbefehl für das Gerät gespeichert sind. Die integrierte Steuereinrichtung des Haushaltsgerätes bzw. die zentrale Steuereinrichtung des Systems kann auf diese externe Speichereinrichtung zugreifen und daraus Informationen zum Generieren des Steuerbefehls erlangen. Sofern beispielsweise eine lokale Steuereinrichtung des Haushaltsgerätes mit der externen Speichereinrichtung verbunden ist, kann das Haushaltsgerät darauf zugreifen, um Steuerbefehle für bestimmte Zeitpunkte einer Folge von vorgegebenen Arbeitsschritten abzufragen. Hierzu kann ein Steuerbefehl mit einer entsprechenden Datei auf der externen Speichereinrichtung verknüpft sein. Ebenso kann eine zentrale Steuereinrichtung des Systems eine Information von einem Haushaltsgerät erhalten, welcher Arbeitsschritt einer Folge von mehreren Arbeitsschritten derzeit erreicht ist, woraufhin die zentrale Steuereinrichtung den aktuellen Status der Abarbeitung der Arbeitsschritte des Haushaltsgerätes an die Speichereinrichtung übermittelt und einen dazu korrespondierenden Steuerbefehl empfängt, welcher dann wiederum an das Gerät übermittelt werden kann. Des Weiteren kann es auch vorgesehen sein, dass die Folge von Arbeitsschritten zur Zubereitung einer Speise in der externen Speichereinrichtung gespeichert ist. Vor und/oder während der Zubereitung greift das Haushaltsgerät auf die externe Speichereinrichtung und die darin gespeicherten Arbeitsschritte zu. Gegebenenfalls kann es auch vorgesehen sein, dass die in der externen Speichereinrichtung gespeicherten Arbeitsschritte in eine lokale Steuereinrichtung des Haushaltsgerätes heruntergeladen werden, so dass das Haushaltsgerät während der Zubereitung nicht auf eine funktionierende Datenkommunikation zu der externen Speichereinrichtung angewiesen ist.

Des Weiteren wird mit der Erfindung ein Verfahren zum Betrieb eines Haushaltsgerätes vorgeschlagen, wobei eine Speise entsprechend einer Folge von vorgegebenen Arbeitsschritten zubereitet wird, wobei in Abhängigkeit von einem Fortgang der Folge von Arbeitsschritten ein Steuerbefehl zur Steuerung eines externen Reinigungsgerätes, oder ggf. eines oder mehrerer weiterer Geräte, generiert und an das Reinigungsgerät und ggf. an das ein oder mehrere weitere Gerät übermittelt wird. Es wird vorgeschlagen, dass durch den Steuerbefehl eine Anweisung an das Reinigungsgerät übermittelt wird, eine Reinigung im Bereich des Gerätestandortes des Haushaltsgerätes auszuführen.

Dem externen Gerät kann des Weiteren eine Information über eine Zutat, welche in einem dem Steuerbefehl vorangegangen Arbeitsschritt verwendet wurde, übermittelt werden. Zudem kann der Steuerbefehl eine Anweisung zum Ausführen einer Reinigung aufweisen, wobei die Reinigung ein Wischen und/oder ein Saugen und/oder ein Trocknen und/oder ein Luftreinigen beinhaltet. Insbesondere kann eine Art der Reinigung in Abhängigkeit von einer verarbeiteten Zutat gesteuert werden.

Das erfindungsgemäße Verfahren sieht somit vor, dass ein Betriebsmodus eines Gerätes, insbesondere eines autonomen Reinigungsgerätes, wie Saugroboter, Feuchtreinigungsroboter, Überbodenreinigungsgerät oder Luftreiniger oder dergleichen, automatisch durch ein anderes Gerät, nämlich ein Haushaltsgerät gesteuert wird. Zur optimalen Ausführung des Verfahrens werden das Haushaltsgerät und das Gerät bzw. mehrere dieser Geräte erfasst und bei einer Steuereinrichtung registriert, welche eine lokale Steuereinrichtung des Haushaltsgerätes oder auch eine zentrale, separate Steuereinrichtung des Systems sein kann. Bei der Registrierung wird eine Geräteidentifikation sowie vorteilhaft auch ein Gerätetyp und/oder ein Gerätestandort jedes der beteiligten Geräte registriert. Die Kommunikation mit der Steuereinrichtung kann über WLAN, Bluetooth, ZigBee oder andere drahtlose Funktechnologien erfolgen. Darüber hinaus ist auch eine drahtgebundene Kommunikation möglich, beispielsweise mittels PowerLAN. Die Rezepte, d. h. die Folgen von vorgegebenen Arbeitsschritten zur Zubereitung einer Speise, werden vorzugsweise lokal in dem Haushaltsgerät gespeichert, oder in einer externen Speichereinrichtung, beispielsweise einem Webserver mit einer Rezeptdatenbank. In jedem Rezept können neben den Zutaten und den Arbeitsschritten auch Informationen darüber gespeichert sein, welche Art von Verschmutzung bei der Zubereitung entstehen kann und/oder welches Kommunikationsprotokoll das Gerät verwendet.

Ein Verfahren gemäß der Erfindung kann beispielsweise vorsehen, dass das externe Gerät eine Fußbodenreinigung zu Beginn, während und/oder am Ende einer Rezeptabarbeitung des Haushaltsgerätes ausführt. Das Gerät kann beispielsweise ein Saugroboter und/oder ein Feuchtreinigungsroboter sein. Das Reinigungsgerät wird entsprechend der Verschmutzungsart der Speisenzubereitung gesteuert. Dabei kann die Reinigungsart, zum Beispiel Wischen, Saugen, Trocknen, sowie auch die Position und/oder die Größe der zu reinigenden Fläche von dem Gerät bestimmt werden. Insbesondere kann es vorgesehen sein, dass ein Reinigungsgerät die genaue Position und/oder Größe der zu reinigenden Bodenfläche selbst bestimmt, indem die Verschmutzung mittels eines Sensors des Reinigungsgerätes detektiert wird. Des Weiteren kann vorgesehen sein, dass eine Reihenfolge mehrerer Reinigungsschritte eines oder mehrerer Reinigungsgeräte abhängig von der Art der Speisenzubereitung gesteuert wird. Bei einer Folge von Arbeitsschritten, welche beispielsweise dem Backen von Plätzchen dient, kann das Reinigungsgerät eine Reinigung zuerst durch Saugen und danach durch Wischen bewirken. Bei Arbeitsschritten, die ein Braten von Speisen vorsehen, und damit auch die Benutzung von Fett und/oder Öl, kann zunächst eine Feuchtreinigung durchgeführt werden. Bevor die Reinigung mittels des Reinigungsgerätes gestartet wird, kann zunächst ermittelt werden, ob sich eine Person im Bereich des Gerätestandortes des Haushaltsgerätes aufhält. In Abhängigkeit davon können dann weitere Maßnahmen geplant werden, beispielsweise eine Ausgabe eines Hinweises an die Person, dass in Kürze eine Reinigung im Bereich des Gerätestandortes erfolgt, und/oder eine zeitliche Verzögerung des Reinigungsvorgangs oder dergleichen.

Eine weitere Verfahrensführung kann eine Überbodenreinigung beinhalten. Beispielsweise kann zu Beginn, während und/oder nach dem Zubereiten einer Speise ein Überbodenreinigungsgerät zur Reinigung einer Küchenarbeitsplatte gesteuert werden. In Abhängigkeit von einer in einem Arbeitsschritt verwendeten Zutat kann ein bestimmtes Reinigungsmittel verwendet werden, um eine optimale Reinigung zu bewirken. Das Überbodenreinigungsgerät wird durch einen Steuerbefehl gesteuert, welcher in die Folge von vorgegebenen Arbeitsschritten des Haushaltsgerätes integriert ist. Dieser Steuerbefehl kann eine Anweisung zur Benutzung eines bestimmten Reinigungsmittels beinhalten, so dass eine optimale Durchführung des Reinigungsschrittes möglich ist.

In einem Fall, in welchem ein Rezept abgearbeitet wird, bei dem eine Geruchsbelästigung zu erwarten ist, zum Beispiel beim Anbraten von Fleisch oder Zwiebeln, kann ein als Luftreiniger ausgebildetes Gerät, beispielsweise eine Dunstabzugshaube, zu Beginn des entsprechenden Arbeitsschrittes aktiviert werden, so dass die Geruchsbelästigung beseitigt oder zumindest minimiert werden kann. Der Steuerbefehl der Steuereinrichtung kann beispielsweise Anweisungen über eine Lüfterstufe, einen Volumenstrom, eine Art der Luftreinigung und/oder Elemente zur Geruchsneutralisierung enthalten.

### Kurze Beschreibung der Zeichnungen

Im Folgenden wird die Erfindung anhand von Ausführungsbeispielen näher erläutert. Es zeigen:
- Fig. 1: ein System aus einem Haushaltsgerät und einem externen Gerät gemäß einer ersten Ausführungsform,
- Fig. 2: ein System aus einem Haushaltsgerät, einem externen Gerät und einer separat ausgebildeten Steuereinrichtung gemäß einer zweiten Ausführungsform.

### Beschreibung der Ausführungsformen

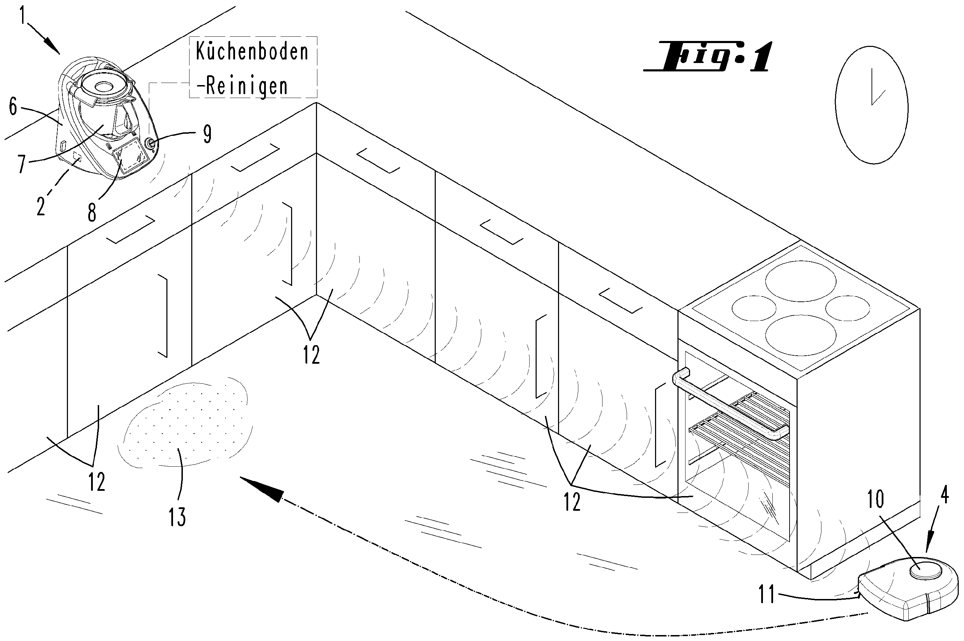

Figur 1 zeigt eine erste Ausführungsform der Erfindung mit einem System aus einem Haushaltsgerät 1 und einem Gerät 4.

Das Haushaltsgerät 1 ist ein übliches Koch-Mix-Gerät, welches zur Zubereitung einer Speise anhand einer Folge von vorgegebenen Arbeitsschritten ausgebildet ist. Das Haushaltsgerät 1 weist mehrere Zubereitungseinrichtungen auf, beispielsweise ein Rührwerk und eine Heizeinrichtung. Das Haushaltsgerät 1 weist darüber hinaus ein Zubereitungsgefäß 7 auf, in welches Zutaten zur Zubereitung eingebracht werden können. In dem Haushaltsgerät 1 ist eine interne Steuereinrichtung 2 zur Steuerung der Zubereitungseinrichtungen anhand der vorgegebenen Arbeitsschritte integriert. Darüber hinaus weist das Haushaltsgerät 1 ein Display 8 auf, welches einem Nutzer zur Anzeige von Informationen dient, sowie einen Schalter 9 zum An- und Ausschalten des Haushaltsgerätes 1 bzw. zur Bestätigung einer auf dem Display 8 angezeigten Mitteilung. Das Zubereitungsgefäß 7 ist an einem Basisgerät 6 des Haushaltsgerätes 1 angeordnet, wobei ein Rührwerk (nicht dargestellt) von unten in das Zubereitungsgefäß 7 ragt. Das Haushaltsgerät 1 weist des Weiteren eine nicht dargestellte Kommunikationseinrichtung auf, welche hier beispielsweise ein WLAN-Kommunikationsmodul ist. Die Kommunikationseinrichtung dient zur Kommunikation mit einer entsprechenden Kommunikationseinrichtung des dargestellten Gerätes 4.

Das Gerät 4 ist hier ein sich selbsttätig fortbewegender Reinigungsroboter, welcher angetriebene Räder (nicht dargestellt) und mehrere Reinigungselemente 11 aufweist, von welchen in der Figur nur eine nach außen ragende Seitenbürste sichtbar ist. Das selbsttätig verfahrbare Gerät 4 weist eine Navigations- und Selbstlokalisierungseinrichtung auf, um sich innerhalb der Umgebung orientieren und fortbewegen zu können. Zu der Navigations- und Selbstlokalisierungseinrichtung gehört eine Abstandsmesseinrichtung 10, welche hier beispielsweise als Triangulationsmesseinrichtung ausgebildet ist. Die Abstandsmesseinrichtung 10 dient zum Messen eines Abstandes zu Objekten 12 der Umgebung, hier beispielsweise den Schränken der dargestellten Küche. Anhand der von der Abstandsmesseinrichtung 10 aufgenommenen Messdaten kann eine Umgebungskarte angelegt werden, welche die Objekte 12, das Haushaltsgerät 1 und das Gerät 4 beinhaltet. Das Gerät 4 weist ein WLAN-Kommunikationsmodul zur Kommunikation mit dem Haushaltsgerät 1 auf.

Gemäß dieser Ausführung arbeitet das Haushaltsgerät 1 während der Zubereitung einer Speise ein Programm mit vorgegebenen Arbeitsschritten ab. Diese Arbeitsschritte können beispielsweise ein Zerkleinern, Rühren und Erhitzen von Speisen und/oder Zutaten innerhalb des Zubereitungsgefäßes 7 beinhalten. Des Weiteren beinhaltet die Folge von vorgegebenen Arbeitsschritten, welche der Zubereitung der Speise dient, einen Steuerbefehl, nämlich hier "Küchenboden reinigen", welcher in einer bestimmten zeitlichen Reihenfolge zu den weiteren Arbeitsschritten das Haushaltsgerät 1 ausgegeben wird. Hier ist die Ausgabe des Steuerbefehls beispielsweise zu einem Zeitpunkt vorgesehen, zu welchem die letzte Zutat in das Zubereitungsgefäß 7 eingegeben wird. Der Steuerbefehl "Küchenboden reinigen" wird mittels der Kommunikationseinrichtung, d. h. hier per WLAN, an das Gerät 4 übermittelt. Der Steuerbefehl beinhaltet eine Geräteidentifikation des Gerätes 4 sowie die Anweisung zum Reinigen des Fußbodens im Bereich des Haushaltsgerätes 1 und gegebenenfalls eine Information über den Gerätestandort des Haushaltsgerätes 1. Alternativ kann das Gerät 4 über eine Umgebungskarte verfügen, in welcher der Gerätestandort des Haushaltsgerätes 1 verzeichnet ist, so dass das Gerät 4 bereits Kenntnis über den Gerätestandort des Haushaltsgerätes 1 hat. Daraufhin bewegt sich das Gerät 4 gemäß dem Steuerbefehl in den Bereich des Gerätestandortes des Haushaltsgerätes 1. Da es sich hier bei dem Gerät 4 um ein Bodenreinigungsgerät handelt, verfährt das Gerät 4 in einen Bodenbereich vor und unterhalb des Haushaltsgerätes 1. Dort kann das Gerät 4 gegebenenfalls befindlichen Schmutz 13 einsaugen oder aufwischen.

Es kann zusätzlich vorgesehen sein, dass das Haushaltsgerät 1 mit dem Steuerbefehl eine Information über die bisher verwendeten Zutaten an das Gerät 4 übermittelt, so dass das Gerät 4 eine Reinigungsart und/oder ein Reinigungsmittel wählen kann, mittels welchen der Schmutz 13 optimal beseitigt werden kann. Diese Ausführung bietet sich insbesondere bei Geräten 4 an, welche Kombinationsgeräte sind, die unterschiedliche Reinigungsarten, z. B. Saugen und Feuchtwischen, ausführen können.

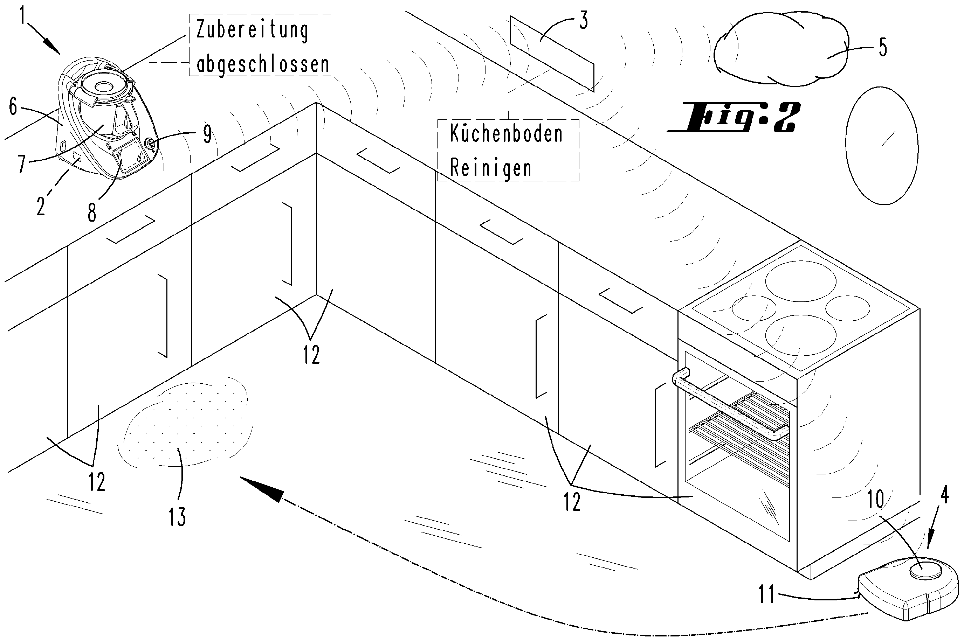

Figur 2 zeigt eine weitere beispielhafte Ausführung der Erfindung mit einem System aus einem Haushaltsgerät 1, einem Gerät 4 und einer separat dazu ausgebildeten Steuereinrichtung 3, welche hier beispielsweise an einer Wand des Raumes installiert ist. Die Steuereinrichtung 3 weist hier des Weiteren eine Kommunikationsverbindung zu einer externen Speichereinrichtung 5, hier beispielsweise einem Webserver (Cloud), auf. Die Speichereinrichtung 5 könnte grundsätzlich auch eine interne Speichereinrichtung des Kommunikationsnetzwerkes des dargestellten Systems sein.

Gemäß dieser Ausführung kommunizieren das Haushaltsgerät 1 und das Gerät 4 über die separate Steuereinrichtung 3 miteinander, wobei ein Steuerbefehl zur Reinigung eines Gerätestandortes des Haushaltsgerätes 1 von der Steuereinrichtung 3 generiert und an das Gerät 4 übermittelt wird. Im Einzelnen erfolgt die Verfahrensführung so, dass das Haushaltsgerät 1 eine Zubereitung einer Speise anhand einer Folge von vorgegebenen Arbeitsschritten ausführt. Dabei beinhaltet die Folge von Arbeitsschritten beispielsweise ein Zerkleinern, Heizen und/oder Rühren von Zutaten sowie nach beendeter Zubereitung den Steuerbefehl "Zubereitung abgeschlossen". Der Steuerbefehl "Zubereitung abgeschlossen" wird per WLAN an die separate Steuereinrichtung 3 übertragen und enthält eine Anweisung für die Steuereinrichtung 3, einen Steuerbefehl für das Gerät 4 zu generieren. Zum Generieren des Steuerbefehls greift die Steuereinrichtung 3 auf die externe Speichereinrichtung 5 zu, in welcher den Anweisungen des Haushaltsgerätes 1 Steuerbefehle für das Gerät 4 zugeordnet sind. In der Speichereinrichtung 5 können in einer Tabelle und/oder Umgebungskarte weitere Informationen über das Gerät 4 (oder weitere in der Umgebung befindliche Geräte 4) hinterlegt sein. Anhand der Informationen kann die externe Steuereinrichtung 3 ein nächstliegendes, in Betrieb befindliches Gerät 4 auswählen, welches für die jeweilige Aufgabe und Situation vorteilhaft ist, und diesem Gerät 4 einen entsprechenden Steuerbefehl übermitteln. Alternativ wäre es selbstverständlich auch möglich, dass die Steuereinrichtung 3 einen von dem Haushaltsgerät 1 generierten Steuerbefehl "Küchenboden reinigen" unverändert an das Gerät 4 weiterleitet. Sofern es sich bei der Steuereinrichtung 3 jedoch um eine Steuereinrichtung 3 eines komplexeren Hausautomationssystems mit einer Mehrzahl von Haushaltsgeräten 1 und/oder Geräten 4 handelt, kann es vorteilhaft sein, dass die Steuereinrichtung 3 die Steuerbefehle selbst generiert und an ausgewählte Geräte 4 übermittelt.

Die zentrale Steuereinrichtung 3 des Systems kann grundsätzlich auch eine Steuereinrichtung 2, 3 eines Haushaltsgerätes 1 und/oder eines Gerätes 4 sein. Dabei ist die Steuereinrichtung 2, 3 zwar in eines der Geräte integriert, dient jedoch in gleicher Art und Weise als zentrale Steuereinrichtung 3, welche eine Kommunikationsverbindung zu dem Haushaltsgerät 1, dem Gerät 4 und gegebenenfalls auch einer externen Speichereinrichtung 5 aufweist.

### Liste der Bezugszeichen

- 1: Haushaltsgerät
- 2: Steuereinrichtung
- 3: Steuereinrichtung
- 4: Gerät
- 5: Speichereinrichtung
- 6: Basisgerät
- 7: Zubereitungsgefäß
- 8: Display
- 9: Schalter
- 10: Abstandsmesseinrichtung
- 11: Reinigungselement
- 12: Objekt
- 13: Schmutz

## Patentansprüche

1. Haushaltsgerät (1), welches eine Steuereinrichtung (2) zum Steuern einer Zubereitung einer Speise entsprechend einer Folge von vorgegebenen Arbeitsschritten aufweist, wobei die Steuereinrichtung (2) ausgebildet und eingerichtet ist, in Abhängigkeit von einem Fortgang der Folge von Arbeitsschritten mindestens einen Steuerbefehl zur Steuerung mindestens eines externen Gerätes (4) auszugeben, **dadurch gekennzeichnet, dass** der Steuerbefehl eine Anweisung für das externe Gerät (4) enthält, eine Reinigung im Bereich eines Gerätestandortes des Haushaltsgerätes (1) auszuführen.

2. Haushaltsgerät (1) nach Anspruch 1, **dadurch gekennzeichnet, dass** der Steuerbefehl eine Information über eine Zutat aufweist, welche in der Folge von vorangegangenen Arbeitsschritten enthalten ist.

3. System aus einem Haushaltsgerät (1), welches zum Zubereiten einer Speise entsprechend einer Folge von vorgegebenen Arbeitsschritten ausgebildet ist, und einem externen Gerät (4), **dadurch gekennzeichnet, dass** eine Steuereinrichtung (2) des Haushaltsgerätes (1) und/oder eine separat zu dem Haushaltsgerät (1) ausgebildete Steuereinrichtung (3) ausgebildet und eingerichtet ist, in Abhängigkeit von einem Fortgang der Folge von Arbeitsschritten einen Steuerbefehl an das externe Gerät (4) zu übermitteln, wobei der Steuerbefehl eine Anweisung aufweist, eine Reinigung im Bereich eines Gerätestandortes des Haushaltsgerätes (1) auszuführen.

4. System nach Anspruch 3, **dadurch gekennzeichnet, dass** die separate Steuereinrichtung (3) eingerichtet ist, den Steuerbefehl zu generieren und an das externe Gerät (4) zu übermitteln und/ oder einen von der Steuereinrichtung (2) des Haushaltsgerätes (1) generierten Steuerbefehl an das externe Gerät (4) weiterzuleiten.

5. System nach Anspruch 3 oder 4, **gekennzeichnet durch** eine externe Speichereinrichtung (5), insbesondere Webserver, in welcher eine Folge von Arbeitsschritten zur Zubereitung einer Speise und/ oder ein Steuerbefehl für das externe Gerät (4) gespeichert sind.

6. Verfahren zum Betrieb eines Haushaltsgerätes (1), wobei eine Speise entsprechend einer Folge von vorgegebenen Arbeitsschritten zubereitet wird, wobei in Abhängigkeit von einem Fortgang der Folge von Arbeitsschritten ein Steuerbefehl zur Steuerung eines externen Gerätes (4) generiert und an das externe Gerät (4) übermittelt wird, **dadurch gekennzeichnet, dass** durch den Steuerbefehl eine Anweisung an das externe Gerät (4) übermittelt wird, eine Reinigung im Bereich des Gerätestandortes des Haushaltsgerätes (1) auszuführen.

7. Verfahren nach Anspruch 6, **dadurch gekennzeichnet, dass** dem externen Gerät (4) eine Information über eine Zutat, welche in einem dem Steuerbefehl vorangegangenen Arbeitsschritt verwendet wurde, übermittelt wird.

8. Verfahren nach Anspruch 6 oder 7, **dadurch gekennzeichnet, dass** der Steuerbefehl eine Anweisung zum Ausführen einer Reinigung aufweist, wobei die Reinigung ein Wischen und/oder Saugen und/oder Trocknen und/oder Luftreinigen beinhaltet, und wobei die Art der Reinigung insbesondere in Abhängigkeit von einer verarbeiteten Zutat gesteuert wird.

## Claims

1. A household appliance (1), which has a controller (2) for controlling the preparation of a meal according to a sequence of prescribed steps, wherein the controller (2) is designed and set up to output at least one control command for controlling at least one external device (4) depending on the progress of the sequence of steps, **characterized in that** the control command contains an instruction for the external device (4) to effect cleaning in the area where the household appliance (1) is located.

2. The household appliance (1) according to claim 1, **characterized in that** the control command has information about an ingredient that is contained in the sequence of preceding steps.

3. A system comprised of a household appliance (1), which is designed to prepare a meal according to a sequence of prescribed steps, and an external device (4), **characterized in that** a controller (2) of the household appliance (1) and/or a controller (3) configured separately from the household appliance (1) is designed and set up to transmit a control command to the external device (4) depending on the progress of the sequence of steps, wherein the control command includes an instruction that cleaning be performed in the area where the household appliance (1) is located.

4. The system according to claim 3, **characterized in that** the separate controller (3) is set up to generate the control command and transmit it to the external device (4) and/or to relay a control command generated by the controller (2) of the household appliance (1) to the external device (4).

5. The system according to claim 3 or 4, **characterized by** an external memory (5), in particular a webserver, which stores a sequence of steps for preparing a meal and/or a control command for the external device (4).

6. A method for operating a household appliance (1), wherein a meal is prepared according to a sequence of prescribed steps, wherein a control command is for controlling an external device (4) is generated and transmitted to the external device (4) depending on the progress of the sequence of steps, **characterized in that** the control command transmits an instruction to the external device (4) to effect cleaning in the area where the household appliance (1) is located.

7. The method according to claim 6, **characterized in that** information about an ingredient that was used in a step preceding the control command is transmitted to the external device (4).

8. The method according to claim 6 or 7, **characterized in that** the control command has an instruction for implementing a cleaning process, wherein cleaning involves wiping and/or vacuuming and/or drying and/or air purification, and wherein the type of cleaning is controlled in particular as a function of a processed ingredient.

## Revendications

1. Appareil ménager (1), qui présente un dispositif de commande (2) pour commander une préparation d'un mets selon une séquence d'étapes de travail prédéfinies, le dispositif de commande (2) étant conçu et configuré pour délivrer au moins un ordre de commande pour commander au moins un appareil externe (4) en fonction d'un avancement de la séquence d'étapes de travail, **caractérisé en ce que** l'ordre de commande contient une instruction pour l'appareil externe (4) d'effectuer un nettoyage dans la zone d'un emplacement de l'appareil ménager (1).

2. Appareil ménager (1) selon la revendication 1, **caractérisé en ce que** l'ordre de commande comprend une information sur un ingrédient qui est contenu dans la séquence d'étapes de travail précédentes.

3. Système comprenant un appareil ménager (1) qui est conçu pour préparer un mets selon une séquence d'étapes de travail prédéterminées, et un appareil externe (4), **caractérisé en ce qu'**un dispositif de commande (2) de l'appareil ménager (1) et/ou un dispositif de commande (3) formé séparément de l'appareil ménager (1) est conçu et configuré pour transmettre un ordre de commande à l'appareil externe (4) en fonction d'un avancement de la séquence d'étapes de travail, l'ordre de commande comportant une instruction d'effectuer un nettoyage dans la zone d'un emplacement de l'appareil ménager (1).

4. Système selon la revendication 3, **caractérisé en ce que** le dispositif de commande séparé (3) est configuré pour générer et transmettre l'ordre de commande à l'appareil externe (4) et/ou pour transmettre à l'appareil externe (4) un ordre de commande généré par le dispositif de commande (2) de l'appareil ménager (1).

5. Système selon la revendication 3 ou 4, **caractérisé par** un dispositif de stockage externe (5), en particulier un serveur web, dans lequel sont stockés une séquence d'étapes de travail pour la préparation d'un mets et/ou un ordre de commande pour l'appareil externe (4).

6. Procédé pour faire fonctionner un appareil ménager (1), dans lequel un mets est préparé selon une séquence d'étapes de travail prédéfinies, dans lequel un ordre de commande pour commander un appareil externe (4) est générée et transmise à l'appareil externe (4) en fonction d'un avancement de la séquence d'étapes de travail, **caractérisé en ce qu'**une instruction d'effectuer un nettoyage dans la zone de l'emplacement de l'appareil ménager (1) est transmise à l'appareil externe (4) par l'ordre de commande.

7. Procédé selon la revendication 6, **caractérisé en ce qu'**est transmise à l'appareil externe (4) une information sur un ingrédient utilisé dans une étape de travail précédant l'ordre de commande.

8. Procédé selon la revendication 6 ou 7, **caractérisé en ce que** l'ordre de commande comprend une instruction d'effectuer un nettoyage, dans lequel le nettoyage comprend l'essuyage et/ou l'aspiration et/ou le séchage et/ou la purification de l'air, et dans lequel le type de nettoyage est commandé en particulier en fonction d'un ingrédient traité.
